# FASCICULE DE BREVET EUROPEEN

(11) **EP 1 582 326 B1**
(45) Date de publication et mention de la délivrance du brevet: **05.09.2007**
(21) Numéro de dépôt: 05290659.1
(22) Date de dépôt: 25.03.2005
(51) Int. Cl.: B28C 5/42

(54) **Mécanisme pour bras de support de convoyeur et ensemble de bras de support équipé d'un tel mécanisme**
Mechanismus für einen Fördertragarm und Tragarmvorrichtung mit solchem Mechanismus
Mechanism for a conveyor supporting arm and a conveyor supporting arm comprising such a mechanism

(30) Priorité: 29.03.2004 FR 0403211
(43) Date de publication de la demande: 05.10.2005
(73) Titulaire: Theam, 44340 Bouguenais (FR)
(72) Inventeur: Levesque, Henri-Bruno, 44000 Nantes (FR)
(74) Mandataire: Gaillarde, Frédéric F. Ch.

(56) Documents cités:
- EP-A- 1 216 804
- US-A- 4 361 219

## Description

La présente invention se rapporte notamment à un mécanisme pour bras de support de convoyeur et à un ensemble de bras de support équipé d'un tel mécanisme.

Comme cela est connu en soi, un convoyeur est relié à une bétonnière par l'intermédiaire d'un bras de support et d'un portique monté fixe sur le châssis de la bétonnière.

Le bras de support est monté rotatif autour d'un premier axe vertical par rapport au portique, et le convoyeur est lui-même monté rotatif autour d'un deuxième axe vertical par rapport audit bras de support.

Dans l'état de la technique, différents mécanismes permettent d'effectuer la rotation du convoyeur par rapport au bras de support : on trouve ainsi des mécanismes à biellettes, des mécanismes à chaîne, des mécanismes à roue dentée et à vis sans fin...

Tous ces mécanismes sont sensibles aux agressions extérieures, et notamment à la pénétration de corps étrangers (laitance de ciment, granulats provenant de la toupie ou du chantier, etc.) susceptibles de les fausser, voire même de les bloquer.

La présente invention a notamment pour but de supprimer ces inconvénients.

On atteint ce but de l'invention avec un mécanisme pour bras de support de convoyeur comprenant :
- un vérin à double effet comprenant un corps et une tige d'actionnement,
- des moyens pour monter ledit corps de manière articulée sur ledit bras de support,
- une couronne intérieure destinée à supporter ledit convoyeur, montée pivotante à l'intérieur d'une couronne extérieure destinée à être fixée sur ledit bras de support,
- une première bielle dont une extrémité est montée pivotante sur ladite tige et dont l'autre extrémité est adaptée pour être montée pivotante sur ledit bras de support, et
- une deuxième bielle dont une extrémité est montée pivotante sur ladite tige et dont l'autre extrémité est reliée de manière pivotante à ladite couronne intérieure.

Ce mécanisme à vérin, bielles et couronne tournante est peu sensible à la pénétration de corps étrangers, aucun moyen de pignon n'étant en effet nécessaire.

Il en résulte que ce mécanisme est peu enclin à se fausser ou à se bloquer, et qu'il offre ainsi une grande précision de réglage de l'orientation du convoyeur.

On notera en outre que ce mécanisme présente un faible encombrement notamment dans la direction verticale (direction dans laquelle sont empilés le plateau tournant est les bielles), ce qui permet de l'intégrer à l'intérieur d'un bras de support présentant une structure de caisson fermé.

Suivant d'autres caractéristiques optionnelles du mécanisme selon l'invention :
- ladite deuxième bielle est montée pivotante sur un plateau d'entraînement lui-même monté fixe sur ladite couronne intérieure,
- ladite première bielle est plus longue que ladite seconde bielle,
- la longueur de ladite première bielle est sensiblement égale au diamètre de ladite couronne intérieure.

La présente invention se rapporte également à un ensemble de bras de support comprenant un bras de support équipé d'un mécanisme conforme à ce qui précède.

Suivant une caractéristique optionnelle de cet ensemble de bras de support, le bras de support présente une structure en caisson renfermant ledit mécanisme.

La présente invention se rapporte également à un ensemble de convoyeur comprenant un convoyeur et un ensemble de bras de support conforme à ce qui précède.

Suivant une caractéristique optionnelle de cet ensemble de convoyeur, ce convoyeur est monté sur ladite couronne intérieure au moyen d'une embase qui prend cette couronne intérieure en sandwich avec ledit plateau d'entraînement.

La présente invention se rapporte également à un véhicule du type bétonnière équipé d'un ensemble de convoyeur conforme à ce qui précède.

D'autres caractéristiques et avantages de la présente invention apparaîtront à la lumière de la description qui va suivre et des dessins annexés dans lesquels :
- la figure 1 est une vue en perspective d'un camion équipé du dispositif selon l'invention,
- la figure 2 est une vue de détail de l'arrière du camion de la figure 1,
- la figure 3 est une vue en perspective du bras de support de la figure 2,
- la figure 4 est une vue en perspective de dessous du bras de support des figures 2 et 3, un couvercle de protection d'un mécanisme d'orientation logé à l'intérieur de ce bras ayant été enlevé,
- la figure 5 est une vue en perspective de ce mécanisme d'orientation lorsqu'il est extrait dudit bras,
- la figure 6 est une vue en coupe selon le plan VI de la figure 3, et
- la figure 7 est une vue du détail VII de la figure 6.

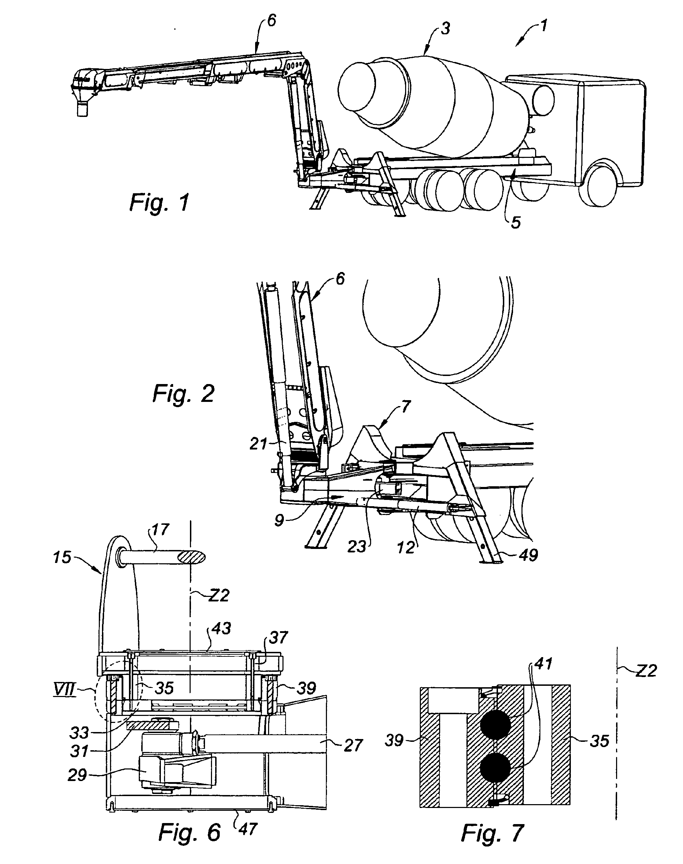

On se reporte à présent à la figure 1 sur laquelle on a représenté un camion 1 du type bétonnière supportant un élément rotatif 3 couramment appelé toupie, permettant de malaxer les matériaux tels que le béton frais.

A l'arrière du châssis 5 du camion 1 se trouve un convoyeur articulé 6 permettant de transporter les matériaux sortant de la toupie 3 à un endroit désiré.

Comme cela est visible sur la figure 2, le convoyeur articulé 6 est relié au châssis 5 du camion 1 par l'intermédiaire d'un système comportant d'une part un portique 7 fixé sur le châssis 5, et d'autre part un bras de support 9 interposé entre le convoyeur articulé 6 et le portique 7.

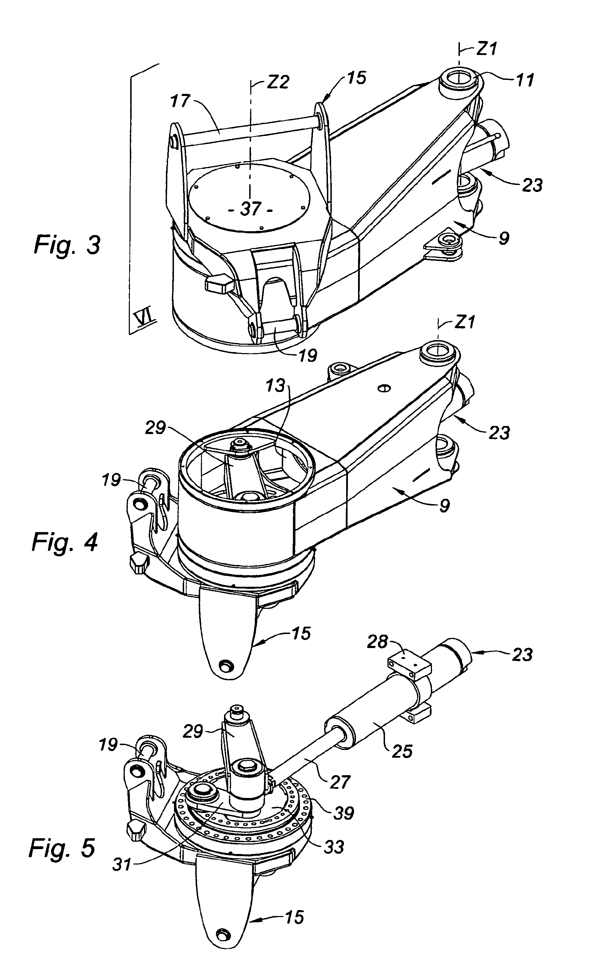

On se reporte à présent aux figures 3 et 4, sur lesquelles on voit que le bras de support 9 consiste en fait en une structure de préférence monobloc définissant un caisson.

Ce caisson est monté articulé autour d'un premier axe vertical Z1 sur le portique 7 par des moyens de palier 11 appropriés.

Un vérin de déploiement à double effet 12 (voir figure 2) est interposé entre le bras de support 9 et le portique 7.

Comme cela est visible en particulier sur la figure 4, le caisson formant le bras de support 9 est de préférence renforcé par des moyens de renfort tels que des nervures 13.

Le bras 9 supporte une embase 15 destinée à recevoir le convoyeur articulé 6. Cette embase 15 comporte d'une part une barre 17 de fixation du convoyeur articulé 6, et d'autre part un barreau 19 destiné à recevoir un vérin 21 (voir figure 2) agissant sur le convoyeur articulé.

L'embase 15 est montée pivotante sur le caisson 9 autour d'un deuxième axe sensiblement vertical Z2.

On se reporte à présent aux figures 4 et 5 sur lesquelles on a représenté le mécanisme permettant de faire pivoter l'embase 15 par rapport au caisson 9 autour de l'axe Z2.

Comme on peut le voir sur ces figures, ce mécanisme comprend un vérin à double effet 23 dont le corps 25 est relié au caisson 9 par une bride 28 autorisant un débattement angulaire de ce vérin par rapport audit caisson.

La tige 27 de ce vérin est reliée d'une part à une extrémité d'une première bielle 29 dont l'autre extrémité est montée pivotante sur le caisson 9, et d'autre part à l'extrémité d'une deuxième bielle 31 dont l'autre extrémité est montée pivotante sur un plateau d'entraînement en forme de disque 33.

Les moyens d'articulation des bielles 29, 31 sur le caisson 9, sur la tige 27 et sur le plateau d'entraînement 33 sont des bagues dites « rotules », montées à force dans les pièces concernées et autorisant un léger pivotement de ces pièces autour d'axes perpendiculaires à leurs axes de rotations principaux.

De telles bagues sont commercialisées notamment par la société INA à HAGUENEAU - 67506 - France.

Du fait de leur montage à force dans les pièces concernées, les bagues « rotules » permettent d'obtenir une grande précision des mouvements relatifs de ces pièces.

Comme cela est visible sur la figure 6, le plateau d'entraînement 33 et l'embase 15 prennent en « sandwich » une couronne intérieure 35.

Ce plateau et cette embase sont reliés à cette couronne intérieure 35 par des vis 37 la traversant, de sorte que l'ensemble de ces pièces forme un seul bloc susceptible de pivoter autour de l'axe Z2.

La couronne intérieure 35 est montée pivotante autour de l'axe Z2 à l'intérieur d'une couronne extérieure concentrique 39, grâce à des moyens de roulement par exemple du type à billes 41 (voir figure 7) interposés entre ces deux couronnes.

L'ensemble formé par les deux couronnes 35, 39 est disponible dans le commerce sous le nom de « couronne d'orientation », notamment chez la société BRB TECHNOLOGIES sise à LA CHEVROLIERE - 44118 - France.

Un tel ensemble offre notamment comme avantage de supporter des charges très lourdes tout en présentant un faible encombrement axial.

Comme cela est visible sur la figure 5, la première bielle 29 peut présenter une longueur supérieure à celle de la deuxième bielle 31, et sensiblement égale au diamètre du plateau d'entraînement 33 et de la couronne intérieure 35.

Cela n'est cependant nullement limitatif, et la première bielle 29 pourrait présenter une longueur inférieure à celle de la deuxième bielle 31, voire même, ces deux bielles pourraient présenter sensiblement la même longueur.

Un flasque 43 est vissé sur l'embase 15 afin de protéger les vis 37 notamment des chutes de béton provenant de la toupie 3 ou du convoyeur 6.

On rappelle ici que sur la figure 4, on a ôté le couvercle de protection 47 (voir figure 6) permettant de fermer le caisson 9, dans un souci de clarté de l'exposé.

En fait, le mécanisme de vérin 23, de bielles 29, 31 de plateau d'entraînement 33 et de couronnes 35, 39 est complètement enfermé à l'intérieur du caisson 9.

Le mode d'utilisation et les avantages du dispositif selon l'invention résultent directement de la description qui précède.

En position de transport, le convoyeur articulé 6 est replié au-dessus de la toupie 3 de manière à ne pas augmenter le gabarit du camion 1.

Lorsqu'on souhaite livrer le matériau situé dans la toupie 3 sur un chantier, on amène le camion 1 sur ce chantier à proximité du lieu de livraison.

Si nécessaire (cas d'un convoyeur articulé de fort poids) on stabilise ce camion au moyen de pieds hydrauliques 49 susceptibles de sortir du portique 7 (voir figure 2).

Une fois cette stabilisation opérée, on utilise le vérin 12 pour déployer le bras 9 en le faisant pivoter autour de l'axe sensiblement vertical Z1.

Une fois ce déploiement effectué, on utilise le vérin 23 pour orienter convenablement le convoyeur articulé 6 en le faisant pivoter autour de l'axe Z2.

Ce pivotement est obtenu grâce à la rotation de la couronne intérieure 35 par rapport à la couronne extérieure 39 sous l'action de la deuxième bielle 31.

Le rôle de la deuxième bielle 31 est de transmettre au plateau d'entraînement 33, et donc à la couronne intérieure 35, les efforts exercés par la tige 27, et le rôle de la première bielle 29 est de maintenir cette bielle orientée selon une direction sensiblement tangente au plateau d'entraînement 33 et à la couronne intérieure 35.

Grâce au maintien de cette orientation, on peut obtenir une importante amplitude de rotation pour le plateau d'entraînement 33 et la couronne intérieure 35, pouvant dépasser 200°.

On notera qu'en choisissant une première bielle 29 de longueur sensiblement égale au diamètre du plateau d'entraînement 33 et de la couronne intérieure 35 et une deuxième bielle 31 plus petite que la première bielle 29, on peut s'assurer que la tangence de deuxième bielle 31 au plateau d'entraînement 33 et à la couronne intérieure 35 soit sensiblement optimale, et donc que le couple exercé par cette deuxième bielle sur ce plateau et cette couronne soit sensiblement maximal.

On notera par ailleurs qu'en choisissant des bielles 29, 31 de longueur inférieure au diamètre du plateau d'entraînement 33 et de la couronne intérieure 35, on s'assure que le mouvement de ces bielles reste en partie contenu à l'intérieur d'un cylindre fictif d'axe Z2, enveloppant la couronne intérieure 35.

Une fois cette orientation du convoyeur articulé 6 effectuée, on agit sur le vérin 21 (ainsi que sur d'autres vérins de ce convoyeur non représentés) de manière à amener l'extrémité de ce convoyeur au lieu de livraison souhaité.

On peut ensuite mettre en route le convoyeur 6 et déverser sur celui-ci le matériau provenant de la toupie 3.

On notera que le mécanisme à vérin, bielles, plateau d'entraînement et couronnes qui vient d'être décrit est d'une part particulièrement peu encombrant (notamment lorsque les bielles 29, 31 présentent une longueur inférieure au diamètre du plateau d'entraînement 33 et de la couronne 35) et d'autre part peu sensible aux corps étrangers susceptibles de provenir de l'environnement de travail du camion 1.

Cet avantage est particulièrement précieux par rapport aux dispositifs de la technique antérieure du type à vis sans fin et roue dentée ou à chaîne, particulièrement sensibles à de tels corps étrangers (laitance, granulats...).

Le faible encombrement de ce mécanisme permet de le loger intégralement à l'intérieur du caisson 9.

Comme on a pu le comprendre à la lumière de ce qui précède, le bras 9 présente une structure de caisson qui lui permet de remplir deux fonctions, à savoir d'une part une fonction de support du convoyeur articulé 6 et d'autre part une fonction de protection du mécanisme à bielles et plateau permettant d'orienter le convoyeur articulé 6.

Bien entendu, la présente invention n'est pas limitée au mode de réalisation décrit et représenté, fourni à titre d'exemple illustratif et non limitatif.

## Revendications

1. Mécanisme pour bras de support (9) de convoyeur (6), comprenant :
- un vérin à double effet (23) comprenant un corps (25) et une tige d'actionnement (27),
- des moyens (28) pour monter ledit corps (25) de manière articulée sur ledit bras de support (9),
- une couronne intérieure (35) destinée à supporter ledit convoyeur (6), montée pivotante à l'intérieur d'une couronne extérieure (39) destinée à être fixée sur ledit bras de support (9),
- une première bielle (29) dont une extrémité est montée pivotante sur ladite tige (27) et dont l'autre extrémité est adaptée pour être montée pivotante sur ledit bras de support (9), et
- une deuxième bielle (31) dont une extrémité est montée pivotante sur ladite tige (27) et dont l'autre extrémité est reliée de manière pivotante à ladite couronne intérieure (35).

2. Mécanisme selon la revendication 1, dans lequel ladite deuxième bielle (31) est montée pivotante sur un plateau d'entraînement (33) lui-même monté fixe sur ladite couronne intérieure (35).

3. Mécanisme selon l'une des revendications 1 ou 2, dans lequel ladite première bielle (29) est plus longue que ladite seconde bielle (31).

4. Mécanisme selon l'une quelconque des revendications 1 à 3, dans lequel la longueur de ladite première bielle (29) est sensiblement égale au diamètre de ladite couronne intérieure (35).

5. Ensemble de bras de support, comprenant un bras de support (9) équipé d'un mécanisme conforme à l'une quelconque des revendications précédentes.

6. Ensemble de bras de support conforme à la revendication 5, dans lequel ledit bras de support (9) présente une structure en caisson renfermant ledit mécanisme.

7. Ensemble de convoyeur, comprenant un convoyeur (6) et un ensemble de bras de support (9) conforme à l'une des revendications 5 ou 6.

8. Ensemble de convoyeur selon la revendication 7 comprenant un convoyeur conforme à la revendication 2, ce convoyeur (6) étant monté sur ladite couronne intérieure (35) au moyen d'une embase (15) qui prend cette couronne intérieure (35) en sandwich avec ledit plateau d'entraînement (33).

9. Véhicule du type bétonnière (1) équipé d'un ensemble de convoyeur conforme à l'une des revendications 7 ou 8.

## Claims

1. Mechanism for a support arm (9) of a conveyor (6), comprising:
- a double-acting actuator (23) comprising a body (25) and an actuator stem (27),
- means (28) for mounting said body (25) in articulated manner on said support arm (9),
- an interior ring (35) for supporting said conveyor (6), pivotally mounted inside an exterior ring (39) adapted to be fixed to said support arm (9),
- a first rod (29) one end of which is pivotally mounted on said stem (27) and the other end of which is adapted to be pivotally mounted on said support arm (9), and
- a second rod (31) one end of which is pivotally mounted on said stem (27) and the other end of which is pivotally connected to said interior ring (35).

2. Mechanism according to claim 1, wherein said second rod (31) is pivotally mounted on a drive plate (33) itself fixedly mounted on said interior ring (35).

3. Mechanism according to either of claims 1 or 2, wherein said first rod (29) is longer than said second rod (31).

4. Mechanism according to any one of claims 1 to 3, wherein the length of said first rod (29) is substantially equal to the diameter of said interior ring (35).

5. Support arm assembly, comprising a support arm (9) equipped with a mechanism according to any one of the preceding claims.

6. Support arm assembly according to claim 5, wherein said support arm (9) has a box structure enclosing said mechanism.

7. Conveyor assembly, comprising a conveyor (6) and a support arm assembly (9) according to either of claims 5 or 6.

8. Conveyor assembly according to claim 7 comprising a conveyor according to claim 2, that conveyor (6) being mounted on said interior ring (35) by means of a base (15) between which and said drive plate (33) this interior ring (35) is sandwiched.

9. Ready-mixed concrete type vehicle (1) equipped with a conveyor assembly according to either of claims 7 or 8.

## Patentansprüche

1. Mechanismus für einen Stützarm (9) eines Förderers (6), mit:
- einem doppelt wirkenden Zylinder (23) mit einem Körper (25) und einer Betätigungsstange (27),
- Einrichtungen (28) zum gelenkigen Befestigen des Körpers (25) an dem Stützarm (9),
- einem zum Stützen des Förderers (6) vorgesehenen inneren Zahnkranz (35), der schwenkbar innerhalb eines äußeren Zahnkranzes (39) angebracht ist, welcher zum Anbringen an dem Stützarm (9) vorgesehen ist,
- einem ersten Pleuel (29), dessen eines Ende schwenkbar an der Stange (27) angebracht ist, und dessen anderes Ende zum schwenkbaren Befestigen an dem Stützarm (9) ausgebildet ist, und
- einem zweiten Pleuel (31), dessen eines Ende schwenkbar an der Stange (27) angebracht ist, und dessen anderes Ende schwenkbar mit dem inneren Zahnkranz (35) verbunden ist.

2. Mechanismus nach Anspruch 1, bei dem der zweite Pleuel (31) schwenkbar an einer Antriebsplatte (33) befestigt ist, die ihrerseits fest an dem inneren Zahnkranz (35) angebracht ist.

3. Mechanismus nach einem der Ansprüche 1 oder 2, bei dem der erste Pleuel (29) länger ist als die zweite Pleuelstange (31).

4. Mechanismus nach einem der Ansprüche 1 bis 3, bei dem die Länge des ersten Pleuels (29) im wesentlichen gleich dem Durchmesser des inneren Zahnkranzes (35) ist.

5. Stützarmanordnung mit einem Stützarm (9), der mit einem Mechanismus nach einem der vorhergehenden Ansprüche versehen ist.

6. Stützarmanordnung nach Anspruch 5, bei welcher der Stützarm (9) eine Kastenstruktur aufweist, welche den Mechanismus umschließt.

7. Förderanordnung mit einem Förderer (6) und einer Stützarmanordnung (9) nach einem der Ansprüche 5 oder 6.

8. Förderanordnung nach Anspruch 7, mit einem Förderer nach Anspruch 2, wobei der Förderer (6) an dem inneren Zahnkranz (35) mittels eines Sockels (15) befestigt ist, welcher den inneren Zahnkranz (35) mit der Antriebsplatte (33) sandwichartig einschließt.

9. Fahrzeug vom Typ Betonmischer (1), versehen mit einer Förderanordnung nach einem der Ansprüche 7 oder 8.
